(19) Europäisches Patentamt

European Patent Office

Office européen des brevets

(11) **EP 3 552 905 B1**

(12) **EUROPEAN PATENT SPECIFICATION**

(45) Date of publication and mention
of the grant of the patent:
**17.09.2025 Bulletin 2025/38**

(21) Application number: **18209168.6**

(22) Date of filing: **29.11.2018**

(51) International Patent Classification (IPC):
***B60W 50/00*** *(2006.01)*     ***B60W 30/18*** *(2012.01)*
***B60W 30/14*** *(2006.01)*     ***B60W 50/14*** *(2020.01)*

(52) Cooperative Patent Classification (CPC):
**B60W 50/00; B60W 30/18163;** B60W 30/146;
B60W 50/14; B60W 2050/0075; B60W 2050/146;
B60W 2555/80; B60W 2556/45

(54) **VEHICLE APPARATUS, SYSTEM HAVING THE SAME AND METHOD FOR AUTOMATICALLY CHANGING OPERABLE RANGE THEREOF**

FAHRZEUGVORRICHTUNG, SYSTEM DAMIT UND VERFAHREN ZUR AUTOMATISCHEN ÄNDERUNG DER BETRIEBSREICHWEITE DAVON

APPAREIL DE VÉHICULE, SYSTÈME LE COMPRENANT ET PROCÉDÉ POUR CHANGER AUTOMATIQUEMENT DE PLAGE DE FONCTIONNEMENT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2018 US 201862655831 P**
               **10.08.2018 KR 20180093914**

(43) Date of publication of application:
**16.10.2019 Bulletin 2019/42**

(73) Proprietors:
• **Hyundai Motor Company**
 **Seoul 06797 (KR)**
• **Kia Corporation**
 **Seocho-gu**
 **Seoul 06797 (KR)**

(72) Inventors:
• **YANG, Na Eun**
 **18280 Gyeonggi-do (KR)**
• **JEONG, Jin Su**
 **18280 Gyeonggi-do (KR)**
• **PARK, Sung Min**
 **18280 Gyeonggi-do (KR)**

(74) Representative: **Hoffmann Eitle**
 **Patent- und Rechtsanwälte PartmbB**
 **Arabellastraße 30**
 **81925 München (DE)**

(56) References cited:
**EP-A1- 2 116 984**      **WO-A1-2010/088869**
**WO-A1-2012/131405**     **US-A1- 2016 272 204**
**US-A1- 2017 313 313**

**Description**

**CROSS-REFERENCES TO RELATED APPLICATIONS**

This application claims the benefit of priority to Korean Patent Application No. 10-2018-0093914, filed on August 10, 2018 in the Korean Intellectual Property Office, and United States Provisional Patent Application No. 62/655,831, filed on April 11, 2018 in the United States Patent and Trademark Office.

**TECHNICAL FIELD**

The present invention relates to a vehicle apparatus, a system including the same, and a method for automatically changing an operable range thereof, and more particularly, to apparatuses, systems, and methods for performing a safe lane change by changing and applying an operable range of a given country.

**BACKGROUND**

In recent years, vehicles have been provided with an autonomous drive control system that automatically recognizes a road environment and determines a driving situation to control the driving of the vehicle. The vehicle can be automatically driven to a destination according to a planned route. Meanwhile, vehicle driving assistance systems can perform various assistive operations, such as cruise control, lane keeping, lane changing, inter-vehicle distance control, and the like.

Conventional vehicle driving assistance systems and autonomous driving systems typically set and use an operable range which in view of a vehicle speed, a road condition, and the like. Problematically, such operable range may vary from country to country. Thus, when a vehicle moves beyond a border to another country while operations are being carried out by a vehicle driving assistance system or autonomous driving system, the operable range must be adapted to the appropriate country.

WO 2010/088869 A1 relates to speed pre-setting for a vehicle having automatic longitudinal control. The document presents a support system for a driver of a vehicle having cruise control or adaptive cruise control. A driver assistance system comprises a database with typical speed limits for a country and a selection element, which offers the driver at least one of said values as a pre-setting for the desired speed of the adaptive cruise control. In more detail, the vehicle includes a cruise control or a proximity control cruise control comprising a database with typical speed limits for a country and a selection element which offers the driver at least one of these values as a preset for the desired speed.

EP 2 116 984 A1 relates to an assistance system for driver support in vehicles, which recognizes area-specific traffic management relevant characteristics, such as traffic signs, lane marking, traffic rules and the like and uses associated data from a data memory for driver information.

WO 2012/131405 A1 relates to automatic control of maximum speed and automatic control system. The system comprises a navigational device, an automatic engine limiting device and a turn signal lever.

US 2016/272204 A1 relates to a driving control device that performs overtaking control and includes a preceding vehicle information acquisition unit, a determination unit configured to determine propriety of the overtaking control, based on a traveling environment, an overtaking vehicle speed calculation unit and a driving control unit.

**SUMMARY**

The present invention has been made to solve the above-mentioned problems occurring in the related art, while advantages achieved by the related art are maintained intact. This is achieved by the independent claims allowing the adaptation of the operation to the appropriate country.

Specifically, the invention achieves this by providing a vehicle apparatus of claim 1, a system of claim 12 including the same, and a method of claim 13 for automatically changing an operable range thereof that can automatically change the operable range based on a given country and apply the changed operable range when inter-country movement occurs during driving assistance or autonomous driving. As a result, driving requirements of each country can be satisfied automatically, and operations such as lane changing functions can be safely performed.

The technical problems to be solved by the present inventive concept are not limited to the aforementioned problems, and any other technical problems not mentioned herein will be clearly understood from the following description by those skilled in the art to which the present invention pertains.

According to the invention, a vehicle apparatus may include: a processor configured to determine an operable range of a driving assistance function or an autonomous driving function to be performed by a vehicle in a country when the vehicle enters into the country while traveling, and to control operation of the vehicle so as to perform the driving assistance function or the autonomous driving function according to the determined operable range; and a storage configured to store the determined operable range enters into traveling.

The operable range of the driving assistance function or the autonomous driving function corresponds to a range from a minimum operable speed to a maximum operable speed, the maximum operable speed being greater than or equal to a maximum speed limit of the country.

The processor may calculate the minimum operable speed according to at least one of: a maximum sensing distance in a rear-side direction of the vehicle, a maximum deceleration of an approaching vehicle, a margin time before the approaching vehicle decelerates when a lane change operation is performed, and a time for the approaching vehicle to maintain a clearance distance between the vehicle and the approaching vehicle after deceleration of the approaching vehicle.

When the vehicle enters into a new country while traveling, the processor may determine whether a maximum speed limit of the country is different from a maximum speed limit of the new country traveling.

The processor may control the vehicle so as to output a notification of a change in the maximum speed limit through a display when the maximum speed limit of the country is different from the maximum speed limit of the new country.

The processor may change the operable range of the driving assistance function or the autonomous driving function based on the maximum speed limit of the new country when the maximum speed limit of the country is different from the maximum speed limit of the new country.

The processor may control the vehicle so as to output the changed operable range of the driving assistance function or the autonomous driving function through a display.

The processor may determine whether a lane changing function is in operation and to determine whether a current driving speed of the vehicle is within the changed operable range when the lane changing function is in operation.

The processor may allow operation of the lane changing function when the current driving speed of the vehicle is within the changed operable range.

The processor may prevent operation of the lane changing function when the current driving speed of the vehicle is not within the changed operable range.

The processor may determine whether the lane changing function can be completed at the current driving speed of the vehicle when the current driving speed of the vehicle is not within the changed operable range.

The processor may control operation of the vehicle so as to perform the lane changing function in the changed operable range when the lane changing function can be completed at the current driving speed of the vehicle, and prevent operation of the lane changing function when the lane changing function cannot be completed at the current driving speed of the vehicle.

Furthermore, according to the present invention, a vehicle system enters into traveling may include: a vehicle apparatus configured to determine an operable range of a driving assistance function or an autonomous driving function to be performed by a vehicle in a country when the vehicle enters into the country while traveling, and to control operation of the vehicle so as to perform the driving assistance function or the autonomous driving function according to the determined operable range; and a display configured to output a notification of the determined operable range, wherein the operable range of the driving assistance function of the autonomous driving function corresponds to a range from a minimum operable speed to a maximum operable speed, the maximum operable speed being greater than or equal to a maximum speed limit of the country.

Furthermore, according to the present invention, a method enters into traveling may include: determining, by a processor, an operable range of a driving assistance function or an autonomous driving function to be performed by a vehicle in a country when the vehicle enters into the country while traveling; controlling, by the processor, operation of the vehicle so as to perform the driving assistance function or the autonomous driving function according to the determined operable range; and outputting, by a display, a notification of the determined operable range, wherein the operable range of the driving assistance function of the autonomous driving function corresponds to a range from a minimum operable speed to a maximum operable speed, the maximum operable speed being greater than or equal to a maximum speed limit of the country.

The method may further include calculating, by the processor, a minimum operable speed according to at least one of: a maximum sensing distance in a rear-side direction of the vehicle, a maximum deceleration of an approaching vehicle, a margin time before the approaching vehicle decelerates when a lane change operation is performed, and a time for the approaching vehicle to maintain a clearance distance between the vehicle and the approaching vehicle after deceleration of the approaching vehicle. The operable range of the driving assistance function or the autonomous driving function may correspond to a range from the calculated minimum operable speed to a maximum operable speed, the maximum operable speed being greater than or equal to a maximum speed limit of the country.

The traveling method may further include: determining, by the processor, whether a lane changing function is in operation; and determining, by the processor, whether a current driving speed of the vehicle is within the changed operable range when the lane changing function is in operation.

The method may further include: allowing, by the processor, operation of the lane changing function when the current driving speed of the vehicle is within the changed operable range; and preventing, by the processor, operation of the lane changing function when the current driving speed of the vehicle is not within the changed operable range.

The method may further include determining, by the processor, whether the lane changing function can be completed at the current driving speed of the vehicle when the current driving speed of the vehicle is not within the changed operable range.

The method may further include: when the vehicle enters into a new country while traveling, determining, by the processor, whether a maximum speed limit of the country is different from a maximum speed limit of the new country; and changing, by the processor, the operable range based on the maximum speed limit of the new country.

The method may further include: controlling, by the processor, operation of the vehicle so as to perform the lane changing function in the changed operable range when the lane changing function can be completed at the current driving speed of the vehicle; and preventing, by the processor, operation of the lane changing function when the lane changing function cannot be completed at the current driving speed of the vehicle.

## BRIEF DESCRIPTION OF THE DRAWINGS

The above and other objects, features and advantages of the present invention will be more apparent from the following detailed description taken in conjunction with the accompanying drawings:

FIG. 1 is a block diagram illustrating a configuration of a vehicle apparatus;
FIG. 2 is a view illustrating a method of controlling a vehicle when a country in which the vehicle is traveling is changed;
FIG. 3 is a view illustrating a method of controlling a vehicle in the case of lane changing when a country in which the vehicle is traveling is changed while traveling;
FIG. 4 is a view illustrating a method of controlling in the case of stopping a lane change when a traveling country is changed while traveling;
FIG. 5 is a flowchart illustrating a method of automatically changing an operable range of a vehicle apparatus;
FIG. 6 is a flowchart illustrating a method of controlling a vehicle when an operable range of a vehicle apparatus is automatically changed;
FIG. 7 is another flowchart illustrating a method of controlling a vehicle when an operable range of a vehicle apparatus is automatically changed; and
FIG. 8 is a view illustrating a computing system.

It should be understood that the above-referenced drawings are not necessarily to scale, presenting a somewhat simplified representation of various preferred features illustrative of the basic principles of the invention. The specific design features of the present invention, including, for example, specific dimensions, orientations, locations, and shapes, will be determined in part by the particular intended application and use environment.

## DETAILED DESCRIPTION OF THE EMBODIMENTS

Hereinafter, embodiments of the present invention will be described in detail with reference to the accompanying drawings. Throughout the specification, it is noted that the same or like reference numerals denote the same or like components even though they are provided in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. The terms are provided only to distinguish the elements from other elements, and the essences, sequences, orders, and numbers of the elements are not limited by the terms. In addition, unless defined otherwise, all terms used herein, including technical or scientific terms, have the same meanings as those generally understood by those skilled in the art to which the present invention pertains. The terms defined in the generally used dictionaries should be construed as having the meanings that coincide with the meanings of the contexts of the related technologies, and should not be construed as ideal or excessively formal meanings unless clearly defined in the specification of the present invention.

As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g., fuels derived from resources other than petroleum). As referred to herein, a hybrid vehicle is a vehicle that has two or more sources of power, for example both gasoline-powered and electric-powered vehicles.

Additionally, it is understood that one or more of the below methods, or aspects thereof, may be executed by at least one controller. The term "controller" may refer to a hardware device that includes a memory and a processor. The memory is configured to store program instructions, and the processor is specifically programmed to execute the program instructions to perform one or more processes which are described further below. The controller may control operation of units, modules, parts, devices, or the like, as described herein. Moreover, it is understood that the below methods may be executed by an apparatus comprising the controller in conjunction with one or more other components, as would be appreciated by a person of ordinary skill in the art.

Furthermore, the controller may be embodied as non-transitory computer readable media containing executable program instructions executed by a processor. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed throughout a computer network so that the program instructions are stored and executed in a distributed fashion, e.g., by a telematics server or a Controller Area Network (CAN).

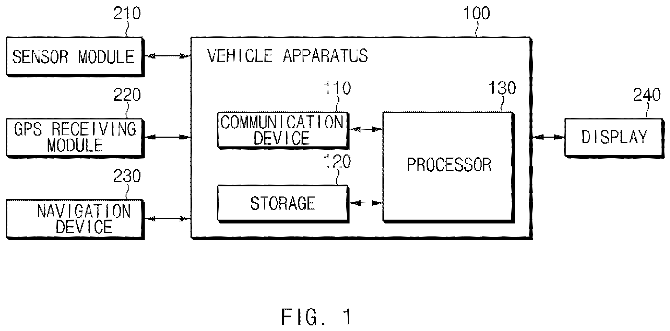

Hereinafter, embodiments will be described in detail with reference to FIGS. 1 to 8.

FIG. 1 is a block diagram illustrating a configuration of a vehicle apparatus.

As shown in FIG. 1, a vehicle system for driving assistance or autonomous driving may include a sensor module 210, a GPS receiving module 220, a navigation device 230, a display 240, and a vehicle apparatus 100. The vehicle apparatus 100 of FIG. 1 may be mounted on a vehicle.

The sensor module 210 may include at least one sensor for sensing an object around the vehicle. The sensor module 210 may obtain information about the location, speed, moving direction, and/or kind of an external object (e.g., a vehicle, a pedestrian, a bicycle, a motorcycle, a road sign, or the like) and transfer the information to the vehicle apparatus 100.

The sensor module 210 may include a yaw rate sensor, a wheel speed sensor, a torque measurement sensor, an acceleration sensor, and the like for measuring dynamic information of the vehicle, and may include a laser, a radar, a camera, a lidar, and the like. In this case, one or more cameras may be provided on a front, a rear, a side, and the like.

The GPS receiving module 220 may receive location information through GPS to estimate the location of the vehicle and transmit the location information to the vehicle apparatus 100.

The navigation device 230 may provide information about a travel route and a travel location to a processor 130 by using the location information of the vehicle received by the GPS receiving module 220, map information stored therein, and the like.

The display 240 may display an operable range of a current traveling country, a changed operable range, a maximum speed limit of a changed traveling country, and the like. The display 240 may visually display information to be recognized by a driver in accordance with a driving environment and a control state. For example, the display 240 may display graphics, icons, texts, and the like, and may provide audio guidance.

When the vehicle enters into a country while traveling, the vehicle apparatus 100 may change and apply the operable range of the vehicle driving assistance function or the autonomous driving function for each country. That is, the vehicle apparatus 100 may control operation of the vehicle so as to perform the vehicle driving assistance function or the autonomous driving function according to the changed operable range.

The vehicle apparatus 100 may be electrically connected to the sensor module 210, the GPS receiving module 220, and the navigation device 230. The vehicle apparatus 100 may include a communication device 110, a storage 120, and the processor 130.

The communication device 110 may communicate with the sensor module 210, the GPS receiving module 220, the navigation device 230, the display 240, and the like in the vehicle.

The storage 120 (e.g., memory) may store information transmitted and received through the communication device 110, and may store in advance a table of the maximum speed limits for each country and a table of operational ranges for each country calculated in advance (e.g., by experiment).

The processor 130 may be an electrical circuit that executes software instructions, and may process and calculate various data as described below.

The processor 130 may obtain dynamic information and the surrounding environment information of the vehicle by interworking with the sensor module 210 and obtain information about a location and a path of the vehicle itself by interworking with the GPS receiving module 220 and the navigation device 230.

The processor 130 may set the operable range such that the vehicle driving assistance function or the autonomous driving function is safely operated in each country according to the maximum speed limit of the current traveling country, and may change the operable range when the traveling country is changed.

When the vehicle enters into a country while traveling, the processor 130 may change the operable range of the function by country when performing the vehicle driving assistance function or the autonomous driving function, and apply the changed operable range.

When the vehicle enters into a country while traveling, the processor 130 may change and apply the operable range of the vehicle driving assistance function or the autonomous driving function by country. In this case, the operable range may correspond to a range from the minimum operable speed to the maximum operable speed, and the maximum operable speed may be set according to the maximum speed limit of the country such that the maximum operable speed is greater than or equal to the maximum speed limit of the country.

The processor 130 may calculate the minimum operable speed by using at least one of the maximum sensing distance in a rear-side direction, the maximum deceleration of an approaching vehicle, a margin time until the approaching vehicle decelerates after a lane changing operation starts, and a time for the approaching vehicle to maintain a clearance distance between the vehicles after deceleration of the approaching vehicle.

The processor 130 may define the maximum operable speed in consideration of a risk of collision with a nearby vehicle in a lane change, and may determine the maximum operable speed by using the maximum speed limit or higher of each country. In this case, the maximum operable speed may be set to the maximum speed limit or higher of each country for convenience of explanation, but the embodiment is not limited thereto and the maximum operable speed may be changed within a range allowed by a sensor of a vehicle, a processor, a controller, and the like.

In addition, the processor 130 may calculate the minimum operable speed through Equation 1 as follows.

【Equation 1】

$$V_{Smin} = a * (t_B - t_G) + v_{app} - \sqrt{a^2 * (t_B - t_G)^2 - 2 * a * (v_{app} * t_G - S_{rear})}$$

Here, 'Vsmin' is the minimum operable speed, 'a' is the maximum deceleration of an approaching vehicle, 'tB' is a margin time until an approaching vehicle decelerates after the start of a lane changing operation, and 'tG' is a time for an approaching vehicle to maintain a clearance distance between vehicles after deceleration. In addition, 'Vapp' represents the maximum speed limit of each country, and 'Srear' represents the maximum sensing distance of a sensor in a rear-side direction. 'Vapp' is the speed of the approaching vehicle at the rear of the target lane for lane change and can be the maximum speed limit for each country, taking into account the most critical situation in a typical situation.

In Equation 1, the maximum deceleration 'a' of an approaching vehicle, the margin time 'tB' until an approaching vehicle decelerates after the start of a lane changing operation, and the time 'tG' for an approaching vehicle to maintain a clearance distance between vehicles after deceleration may be fixed to 3 m/s², 0.4 seconds, and 1 s, respectively, such that a driver does not feel a great threat when decelerating. In addition, the maximum sensing distance 'Srear' of a sensor in a rear-side direction may be predetermined according to the performance of the sensor and may be assumed to be 55 m for convenience.

When the above-described assumption values are applied to Equation 1 to calculate the minimum operable speed 'Vsmin', the minimum operable speed 'Vsmin' of country 'A' is 60 kph and the minimum operable speed 'Vsmin' of country 'B' is 85 kph, so that not only the maximum speed limit of the traveling country but also the minimum operable speed may be changed, thereby changing the operable range.

[Table 1]

| Srear = 55 m | Country A | Country B |
|---|---|---|
| Maximum operable speed | 110 kph | 130 kph |
| Minimum operable speed | 60 lph (VsminA) | 85 kph (VsminB) |

Although processor 130 may calculate the minimum speed limit of the corresponding country each time through Equation 1, the minimum speed limit may be calculated in advance and stored in the storage 120 as an operable range table for each country, and the processor 130 may change the operable range by using the operable range table when the vehicle moves from one country to another country.

When the country in which the vehicle is traveling is changed, the processor 130 may determine whether the maximum speed limit of the previous traveling country is different from the maximum speed limit of the current traveling country. Further, the processor 130 may control the display 240 to output a notification of the change in the maximum speed limit when the maximum speed limit of the previous traveling country is different from the maximum speed limit of the current traveling country. The processor 130 may change the operable range of a function according to the maximum speed limit of the present traveling country when the maximum speed limit of the previous traveling country is different from the maximum speed limit of the current traveling country.

The processor 130 may control such that the changed operable range of the function is output through the display 240. In addition, the processor 130 may determine whether the lane changing function is currently in operation and whether the current driving speed of the vehicle meets the changed operable range when the lane changing function is in operation. In addition, the processor 130 may continue to perform the lane changing function in the changed operable range when the current driving speed of the vehicle meets the changed operable range.

The processor 130 may stop performing the lane changing function when the current driving speed of the vehicle does not meet the changed operable range, and may determine whether the lane change is able to be completed at the current driving speed of the vehicle when the current driving speed of the vehicle does not meet the changed operable range. In addition, the processor 130 may control operation of the vehicle so as to perform the lane changing function in the changed operable range when the lane change is able to be completed at the current driving speed of the vehicle, and may prevent operation of the lane changing function when the lane change is unable to be completed at the current driving speed of the vehicle.

In addition, the processor 130 may obtain route information through interlocking with the navigation device 230 or the like, so that the processor 130 detects the change of the country in which the vehicle is traveling in advance, thereby controlling the traveling speed to satisfy the operable range at the time of country change.

In addition, the processor 130 may guide the change of the operable range according to the change of the traveling country in advance before crossing the border.

In addition, the processor 130 may change not only the operable range for each country but also the operable range for each road when the running road is changed. That is, the processor 130 may change the operable range by calculating the minimum operable speed based on the maximum speed limit of each road.

The function of the processor 130 may be integrated into the navigation device 230 to be implemented as a single device.

As described above, according to embodiments, even if the traveling country (i.e., the country in which the vehicle is traveling) is changed while traveling, by changing and applying the operable range of the vehicle system providing the lane changing function according to the traveling country, it is possible to comply with the traffic regulations of the corresponding country and prepare for a dangerous situation.

In addition, it is possible to increase the usability of the system function by automatically changing and applying only the operable range of each country without diversifying the system for each country.

In addition, it is possible to further increase the efficiency of the safe driving by outputting the change in the operable range of the system according to the inter-country movement to the display to allow the user to recognize the change in real time.

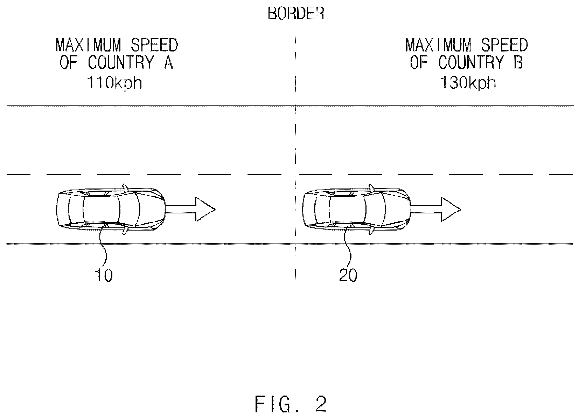

FIG. 2 is a view illustrating a method of controlling a vehicle when a country in which the vehicle is traveling is changed.

FIG. 2 illustrates a case where a vehicle 10 travels on a road near the border of country 'A' and then crosses the border to enter a road of country 'B'. It is assumed that the maximum speed limit of the country 'A' is 110 kph and the maximum speed limit of country 'B' is 130 kph.

When the vehicle 10 travels on the one-way secondary road of the country 'A' and then travels across the border to the country 'B' so that the traveling country is changed, the operable range of the vehicle apparatus 100 may be changed and set in accordance with the general maximum speed limit of the changed traveling country, and then, the vehicle apparatus 100 of the vehicle 20 traveling on the road of the country 'B' may output the operable range of the changed country 'B' through the display 240 to allow the user to recognize the operable range of the country 'B'.

In FIG. 2, since the lane changing operation is not performed when the traveling country is changed, the change of the operable range may be immediately performed and applied and displayed on the display 240.

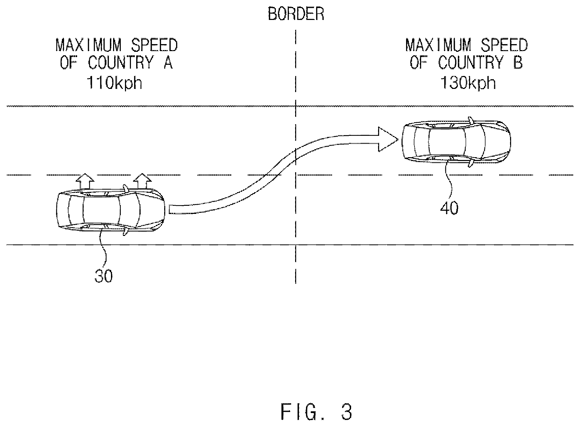

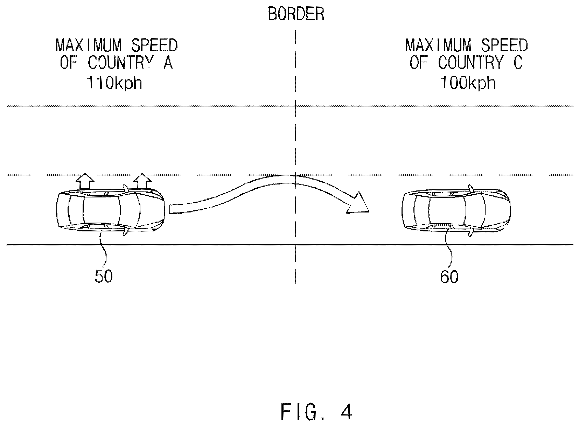

FIG. 3 is a view illustrating a method of controlling a vehicle in the case of lane changing when a country in which the vehicle is traveling is changed while traveling according to an embodiment. FIG. 4 is a view illustrating a method of controlling in the case of preventing a lane change when a country in which the vehicle is traveling is changed while traveling according to an embodiment.

An example of changing a lane while a vehicle 30 travels along the road around the border of country 'A' and then travels across the border to the road of country 'B' will be described with reference to FIG. 3.

That is, when the lane changing function operation is started just before the vehicle 30 reaches the border between the country 'A' and the country 'B', the turn signal lamp starts to operate, and the lane change is normally completed without considering the border, the vehicle 30 travels to the position of a vehicle 40.

In this case, when the traveling country (i.e., the country in which the vehicle is traveling) is changed while the vehicle travels at the current driving speed, the vehicle apparatus 100 may determine whether to continue or stop the lane changing function in consideration of the current driving speed, the operable range of the changed country, and the remaining time until completion of the lane change. That is, when the operable range of the country 'A' overlaps with the operable range of the country 'B', and the lane changing function is impossible in the country 'A' and possible in the country 'B', the vehicle apparatus 100 may perform the lane changing function.

Referring to FIG. 4, when a vehicle 50 moves from country 'A' to country 'C' and the lane change is impossible due to the change in the operable minimum speed 'Vsmin' and the operable maximum speed limit 'Vsmax' of the country 'C', the vehicle apparatus 100 may stop the lane changing function and output the changed operable range through the display 240, thereby allowing a user to recognize the fact.

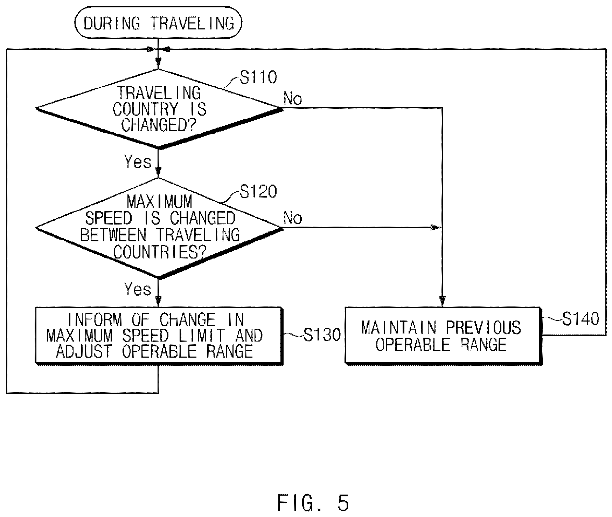

Hereinafter, a method of automatically changing an operable range of a vehicle apparatus according to an embodiment will be described with reference to FIG. 5. FIG. 5 is a flowchart illustrating a method of automatically changing an operable range of a vehicle apparatus according to an embodiment.

Hereinafter, it is assumed that the vehicle apparatus 100 of FIG. 1 carries out the process of FIG. 5. In addition, it may be understood that in the description of FIG. 5, the operations described as being performed by devices are controlled by the processor 130 of the vehicle apparatus 100.

As shown in FIG. 5, in operation S110, the vehicle apparatus 100 may determine whether the country in which the vehicle is currently traveling is changed. In this case, the vehicle apparatus 100 may recognize its own location from the location information received from the GPS receiving module 220 or the map information of the navigation device 230 to determine whether the traveling country is changed.

In operation S140, when the traveling country is not changed at the current position of the vehicle, the vehicle apparatus 100 maintains the previous operable range. When the traveling country is changed at the current position of the vehicle is changed, in operation S120, the vehicle apparatus 100 compares the maximum speed limit of the previous traveling country with the maximum speed limit of the current (or new) traveling country.

When the maximum speed limit of the current (or new) traveling country is different from the maximum speed limit of the current traveling country, that is, when the maximum speed limit of the traveling country is changed, the vehicle apparatus 100 outputs the change in the maximum speed limit through the display 240 to inform the user of the fact and adjusts the operable range based on the maximum speed limit of the current (or new) traveling country (S130).

Meanwhile, in operation S140, when the maximum speed limit of the previous traveling country is equal to that of the current traveling country, that is, when the maximum speed limit of the traveling country is not changed, the vehicle apparatus 100 maintains the previous operable range. Thereafter, the operation S110 is continued to monitor whether the traveling country is changed, and the subsequent operations S120 to S140 are repeated until the driving of the vehicle is stopped. In this case, the vehicle apparatus 100 may determine whether the traveling country is changed in a specified period of time, or may predict in advance whether the traveling country is changed based on the route and map information of the navigation device 230.

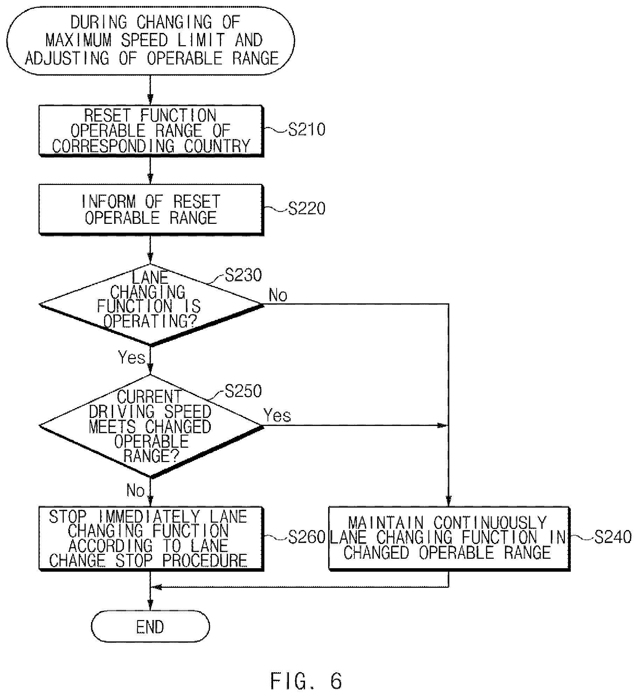

Hereinafter, a method of controlling a vehicle when an operable range of a vehicle apparatus is automatically changed according to embodiments of the present invention will be described in detail with reference to FIG. 6. FIG. 6 is a flowchart illustrating a method of controlling a vehicle when an operable range of a vehicle apparatus is automatically changed according to an embodiment. In following description, it is assumed that the process of FIG. 6 is performed by the vehicle apparatus 100 of FIG. 1. In addition, it may be understood that in the description of FIG. 6, the operations described as being performed by devices are controlled by the processor 130 of the vehicle apparatus 100.

As shown in FIG. 6, in operation S210, when the traveling country is changed and the maximum speed limit is changed in FIG. 5, the operable range for the lane changing function of the changed country is changed. In this case, as described above, the operable range may include a range between the minimum operable speed and the maximum operable speed, and the maximum operable speed may include the maximum speed limit or higher of the traveling country in which the vehicle is currently traveling. In addition, the vehicle apparatus 100 may calculate the minimum operable speed by using the maximum speed limit 'Vapp', the maximum deceleration 'a' of an approaching vehicle, the margin time 'tB' until an approaching vehicle decelerates after the start of a lane changing operation, the time 'tG' for an approaching vehicle to maintain a clearance distance between vehicles after deceleration, the maximum sensing distance 'Srear' of a sensor in a rear-side direction, and the like, which is calculated through Equation 1.

Thereafter, in operation S220, the vehicle apparatus 100 may inform the user of the changed operable range through the display 240 or the like, so that the user may recognize the change in the operable range. Then, in operation S230, the vehicle apparatus 100 determines whether the lane changing function is currently in operation. In this case, the vehicle apparatus 100 may determine whether the lane changing function is currently in operation through the communication with a device in the vehicle that supports the lane changing function or based on the on/off information of the turn signal lamp, and the like.

In operation S240, when the lane changing function is not in operation, the vehicle apparatus 100 may continuously maintain the lane changing function in the changed operable range.

Meanwhile, in operation S250, when the lane changing function is in operation, the vehicle apparatus 100 determines whether the current driving speed meets the changed operable range.

In operation S240, when the current driving speed satisfies the changed operable range, the vehicle apparatus 100 continues to perform the lane changing function in the changed operable range.

To the contrary, when the current driving speed does not satisfy the changed operable range, in operation S260, the vehicle apparatus 100 stops the lane changing function according to a lane change stop procedure.

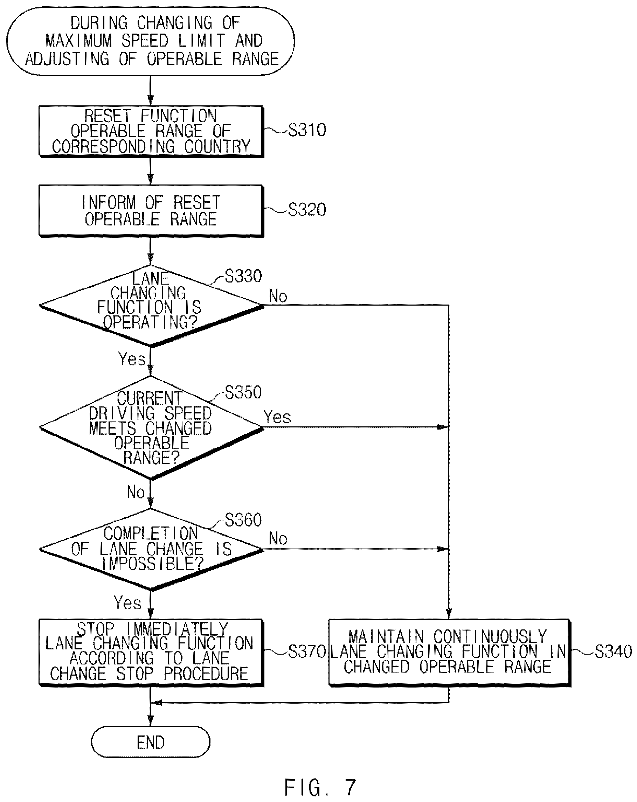

Hereinafter, a method of controlling a vehicle when an operable range of a vehicle apparatus is automatically changed according to embodiments of the present invention will be described in detail with reference to FIG. 7. FIG. 7 is another flowchart illustrating a method of controlling a vehicle when an operable range of a vehicle apparatus is automatically changed.

In the following description, it is assumed that the process of FIG. 7 is performed by the vehicle apparatus 100 of FIG. 1. In addition, it may be understood that in the description of FIG. 7, the operations described as being performed by devices are controlled by the processor 130 of the vehicle apparatus 100.

As shown in FIG. 7, in operation S310, when the traveling country is changed and the maximum speed limit is changed in FIG. 5, the operable range for the lane changing function of the changed country is changed. In this case, as described above, the operable range may include a range between the minimum operable speed and the maximum operable speed, and the maximum operable speed may include the maximum speed limit or higher of the traveling country in which the vehicle is currently traveling. In addition, the vehicle apparatus 100 may calculate the minimum operable speed by using the maximum speed limit 'Vapp', the maximum deceleration 'a' of an approaching vehicle, the margin time 'tB' until an approaching vehicle decelerates after the start of a lane changing operation, the time 'tG' for an approaching vehicle to maintain a clearance distance between vehicles after deceleration, the maximum sensing distance 'Srear' of a sensor in a rear-side direction, and the like, which is calculated through Equation 1.

Thereafter, in operation S320, the vehicle apparatus 100 may inform the user of the changed operable range through the display 240 or the like, so that the user may recognize the change in the operable range. Then, in operation S330, the vehicle apparatus 100 determines whether the lane changing function is currently in operation. In this case, the vehicle apparatus 100 may determine whether the lane changing function is currently in operation through the communication with a device in the vehicle that supports the lane changing function or based on the on/off information of the turn signal lamp, and the like.

In operation S340, when the lane changing function is not in operation, the vehicle apparatus 100 may continuously maintain the lane changing function in the changed operable range.

Meanwhile, when the lane changing function is in operation, in operation S350, the vehicle apparatus 100 determines whether the current driving speed meets the changed operable range.

In operation S340, when the current driving speed satisfies the changed operable range, the vehicle apparatus 100 continues to perform the lane changing function in the changed operable range.

To the contrary, when the current driving speed does not satisfy the changed operable range, in operation S360, the vehicle apparatus 100 determines whether it is possible to complete the lane change when the vehicle continues to run at the current driving speed.

In this case, when the surrounding environment condition perceived by the sensor module 210 is suitable for the lane change, the speed is adjustable within the changed operable range for the remaining time until completion of the lane change, the vehicle apparatus 100 may determine that it is possible to complete the lane change. That is, the case where the surrounding environment condition is suitable for the lane change may include a case where there is no risk of collision although a vehicle which exists at a rear-side on a target lane for the lane change is within the sensing distance 'Srear' of the sensor in a rear-side direction (e.g., a case where the speed of a vehicle at a rear-side is lower than that of the present vehicle). In order to determine that the speed is adjustable within the operable range changed for the remaining time until completion of the lane change, when the lane change operation is not completed after the start of the lane change operation and the time to automatically cancel the lane change operation is 'tC', the vehicle apparatus 100 determines whether it is possible to change the driving speed by accelerating or decelerating the driving speed within the operable range at the acceleration or deceleration 'a' at which the driver does not feel a great sense of heterogeneity while reaching 'tC' after the start of the lane changing operation. That is, when the driving speed is accelerated or decelerated within the operable range at the acceleration or deceleration 'a' at which the driver does not feel a great sense of heterogeneity while reaching 'tC' after the start of the lane changing operation, the vehicle apparatus 100 may determine that it is possible to complete the lane change.

When it is determined in operation S360 that it is possible to complete the lane change, in operation S340, the vehicle apparatus 100 performs the lane changing function in the changed operable range.

To the contrary, when it is impossible to complete the lane change, in operation S370, the vehicle apparatus 100 stops the lane changing function according to a lane change stop procedure.

As described above, according to an embodiment, even if a vehicle moves across a border while traveling so that an inter-country movement occurs, the operable range may be safely changed in preparation for a rear-side dangerous situation corresponding to the maximum speed limit of the country, so that the usability of the driving assistance or autonomous driving function is increased without the need to diversify the autonomous driving system.

In addition, when an inter-country movement occurs while traveling, the information about the changing and setting of the operable range may be provided to the user in real time, thereby allowing the user to safely drive the vehicle.

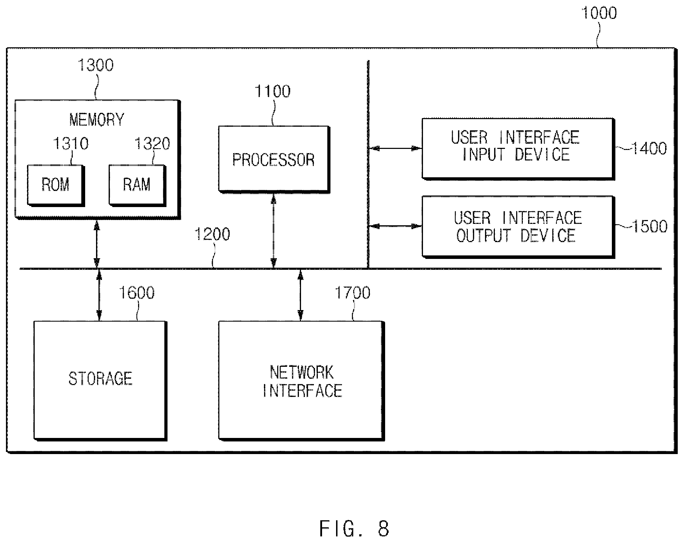

FIG. 8 is a view illustrating a computing system according to embodiments of the present disclosure.

As shown in FIG. 8, a computing system 1000 may include at least one processor 1100, a memory 1300, a user interface input device 1400, a user interface output device 1500, a storage 1600, and a network interface 1700, which are connected through a bus 1200.

The processor 1100 may be a central processing unit (CPU) or a semiconductor device that processes instructions stored in the memory 1300 and/or the storage 1600. The memory 1300 and the storage 1600 may include various volatile or nonvolatile storage media. For example, the memory 1300 may include a read only memory (ROM) and a random access memory (RAM).

Accordingly, the processes of the method or algorithm described in relation to the embodiments of the present invention may be implemented directly by hardware executed by the processor 1100, a software module, or a combination thereof. The software module may reside in a storage medium (i.e., the memory 1300 and/or the storage 1600), such as a RAM memory, a flash memory, a ROM memory, an EPROM memory, an EEPROM memory, a register, a hard disk, a detachable disk, or a CD-ROM.

The exemplary storage medium is coupled to the processor 1100, and the processor 1100 may read information from the storage medium and may write information in the storage medium. In another method, the storage medium may be integrated with the processor 1100. The processor and the storage medium may reside in an application specific integrated circuit (ASIC). The ASIC may reside in a user terminal. In another method, the processor and the storage medium may reside in the user terminal as an individual component.

According to embodiments of the present invention, it is possible to automatically change the operable range into the operable range of a corresponding country and apply the changed operable range when inter-country movement occurs during driving. Thus, driving assistance functions or autonomous driving functions can be performed in automatic accordance with the driving requirements of each country, such that functions such as a lane changing function may be safely performed.

In addition, according to embodiments of the present invention, in a case where the vehicle enters into a country while a lane changing function is in operation, the lane changing is allowed to operate when the current driving speed of the vehicle meets the changed operable range, but the vehicle is controlled to prevent operation of the lane changing when the current driving speed of the vehicle does not meet the changed operable range, so that the safe driving may be achieved.

Various effects that are directly or indirectly understood through the present invention may be provided.

## Claims

1.  A vehicle apparatus (100) comprising:

    a processor (130) configured to determine an operable range of a driving assistance function or an autonomous driving function to be performed by a vehicle in a country when the vehicle enters into the country under one condition of a driving assistance function or an autonomous driving function while traveling, and to change and apply the operable range of the vehicle so as to perform the driving assistance function or the autonomous driving function to comply with the traffic regulations of the country; and
    a storage (120) configured to store the determined operable range,
    **characterized in that**
    the operable range of the driving assistance function or the autonomous driving function corresponds to a range from a minimum operable speed to a maximum operable speed, the maximum operable speed being greater than or equal to a maximum speed limit of the country.

2.  The vehicle apparatus according to claim 1, wherein the processor (130) is configured to calculate the minimum operable speed according to at least one of: a maximum sensing distance in a rear-side direction of the vehicle, a maximum deceleration of an approaching vehicle, a margin time before the approaching vehicle decelerates when a lane change operation is performed, and a time for the approaching vehicle to maintain a clearance distance between the vehicle and the approaching vehicle after deceleration of the approaching vehicle.

3.  The vehicle apparatus according to claim 1, wherein, when the vehicle enters into a new country while traveling, the processor (130) is configured to determine whether a maximum speed limit of the country is different from a maximum speed limit of the new country.

4.  The vehicle apparatus according to claim 3, wherein the processor (130) is configured to control the vehicle so as to output a notification of a change in the maximum speed limit through a display (240) when the maximum speed limit of the country is different from the maximum speed limit of the new country.

5. The vehicle apparatus according to claim 3, wherein the processor (130) is configured to change the operable range of the driving assistance function or the autonomous driving function based on the maximum speed limit of the new country when the maximum speed limit of the country is different from the maximum speed limit of the new country.

6. The vehicle apparatus according to claim 5, wherein the processor (130) is configured to control the vehicle so as to output the changed operable range of the driving assistance function or the autonomous driving function through a display (240).

7. The vehicle apparatus according to claim 6, wherein the processor (130) is configured to determine whether a lane changing function is in operation and to determine whether a current driving speed of the vehicle is within the changed operable range when the lane changing function is in operation.

8. The vehicle apparatus according to claim 7, wherein the processor (130) is configured to allow operation of the lane changing function when the current driving speed of the vehicle is within the changed operable range.

9. The vehicle apparatus according to claim 7, wherein the processor (130) is configured to prevent operation of the lane changing function when the current driving speed of the vehicle is not within the changed operable range.

10. The vehicle apparatus according to claim 7, wherein the processor (130) is configured to determine whether the lane changing function can be completed at the current driving speed of the vehicle when the current driving speed of the vehicle is not within the changed operable range.

11. The vehicle apparatus according to claim 10, wherein the processor (130) is configured to control operation of the vehicle so as to perform the lane changing function in the changed operable range when the lane changing function can be completed at the current driving speed of the vehicle, and to prevent operation of the lane changing function when the lane changing function cannot be completed at the current driving speed of the vehicle.

12. A vehicle system comprising:

a vehicle apparatus (100) according to any of the claims 1 to 11 and
a display (240) configured to output a notification of the determined operable range.

13. A method comprising:

determining, by a processor (130), an operable range of a driving assistance function or an autonomous driving function to be performed by a vehicle in a country when the vehicle enters into the country under one condition of a driving assistance function or an autonomous driving function while traveling;
changing and applying, by the processor (130), the operable range of the vehicle so as to perform the driving assistance function or the autonomous driving function to comply with the traffic regulations of the country; and
outputting, by a display (240), a notification of the determined operable range,
**characterized in that**
the operable range of the driving assistance function or the autonomous driving function corresponds to a range from the calculated minimum operable speed to a maximum operable speed, the maximum operable speed being greater than or equal to a maximum speed limit of the country.

14. The method of claim 13, further comprising
calculating, by the processor (130), a minimum operable speed according to at least one of: a maximum sensing distance in a rear-side direction of the vehicle, a maximum deceleration of an approaching vehicle, a margin time before the approaching vehicle decelerates when a lane change operation is performed, and a time for the approaching vehicle to maintain a clearance distance between the vehicle and the approaching vehicle after deceleration of the approaching vehicle.

**Patentansprüche**

1. Fahrzeugvorrichtung (100), umfassend:

einen Prozessor (130), der konfiguriert ist, um einen betriebsfähigen Bereich einer Fahrassistenzfunktion oder einer autonomen Fahrfunktion zu bestimmen, die von einem Fahrzeug in einem Land durchgeführt werden soll, wenn das Fahrzeug in das Land unter einer Bedingung einer Fahrassistenzfunktion oder einer autonomen Fahrfunktion während der Fahrt einfährt, und um den betriebsfähigen Bereich des Fahrzeugs zu ändern und anzuwenden, um die Fahrassistenzfunktion oder die autonome Fahrfunktion durchzuführen, um die Verkehrsvorschriften des Landes zu erfüllen; und

einen Speicher (120), der konfiguriert ist, um den bestimmten betriebsfähigen Bereich zu speichern,
**dadurch gekennzeichnet, dass**

der betriebsfähigen Bereich der Fahrassistenzfunktion oder der autonomen Fahrfunktion einem Bereich von einer minimalen betriebsfähigen Geschwindigkeit bis zu einer maximalen betriebsfähigen Geschwindigkeit entspricht, wobei die maximale betriebsfähige Geschwindigkeit größer oder gleich einer maximalen Geschwindigkeitsbegrenzung des Landes ist.

2. Fahrzeugvorrichtung nach Anspruch 1, wobei der Prozessor (130) konfiguriert ist, um die minimale betriebsfähige Geschwindigkeit nach mindestens einem von Folgendem zu berechnen: einem maximalen Erfassungsabstand in einer heckseitigen Richtung des Fahrzeugs, einer maximalen Verzögerung eines sich nähernden Fahrzeugs, einer Randzeit, bevor das sich nähernde Fahrzeug verzögert, wenn ein Spurwechselvorgang durchgeführt wird, und einer Zeit für das sich nähernde Fahrzeug, um einen Sicherheitsabstand zwischen dem Fahrzeug und dem sich nähernden Fahrzeug nach der Verzögerung des sich nähernden Fahrzeugs beizubehalten.

3. Fahrzeugvorrichtung nach Anspruch 1, wobei, wenn das Fahrzeug während der Fahrt in ein neues Land einfährt, der Prozessor (130) konfiguriert ist, um zu bestimmen, ob sich eine maximale Geschwindigkeitsbegrenzung des Landes von einer maximalen Geschwindigkeitsbegrenzung des neuen Landes unterscheidet.

4. Fahrzeugvorrichtung nach Anspruch 3, wobei der Prozessor (130) konfiguriert ist, um das Fahrzeug zu steuern, um eine Benachrichtigung über eine Änderung der maximalen Geschwindigkeitsbegrenzung über eine Anzeige (240) auszugeben, wenn sich die maximale Geschwindigkeitsbegrenzung des Landes von der maximalen Geschwindigkeitsbegrenzung des neuen Landes unterscheidet.

5. Fahrzeugvorrichtung nach Anspruch 3, wobei der Prozessor (130) konfiguriert ist, um den betriebsfähigen Bereich der Fahrassistenzfunktion oder der autonomen Fahrfunktion basierend auf der maximalen Geschwindigkeitsbegrenzung des neuen Landes zu ändern, wenn die maximale Geschwindigkeitsbegrenzung des Landes sich von der maximalen Geschwindigkeitsbegrenzung des neuen Landes unterscheidet.

6. Fahrzeugvorrichtung nach Anspruch 5, wobei der Prozessor (130) konfiguriert ist, um das Fahrzeug zu steuern, um den geänderten betriebsfähigen Bereich der Fahrassistenzfunktion oder der autonomen Fahrfunktion über eine Anzeige (240) auszugeben.

7. Fahrzeugvorrichtung nach Anspruch 6, wobei der Prozessor (130) konfiguriert ist, um zu bestimmen, ob eine Spurwechselfunktion in Betrieb ist, und um zu bestimmen, ob eine gegenwärtige Fahrtgeschwindigkeit des Fahrzeugs innerhalb des geänderten betriebsfähigen Bereichs ist, wenn die Spurwechselfunktion in Betrieb ist.

8. Fahrzeugvorrichtung nach Anspruch 7, wobei der Prozessor (130) konfiguriert ist, um den Betrieb der Spurwechselfunktion zu erlauben, wenn die gegenwärtige Fahrtgeschwindigkeit des Fahrzeugs innerhalb des geänderten betriebsfähigen Bereichs ist.

9. Fahrzeugvorrichtung nach Anspruch 7, wobei der Prozessor (130) konfiguriert ist, um den Betrieb der Spurwechselfunktion zu verhindern, wenn die gegenwärtige Fahrtgeschwindigkeit des Fahrzeugs nicht innerhalb des geänderten betriebsfähigen Bereichs ist.

10. Fahrzeugvorrichtung nach Anspruch 7, wobei der Prozessor (130) konfiguriert ist, um zu bestimmen, ob die Spurwechselfunktion bei der gegenwärtigen Fahrtgeschwindigkeit des Fahrzeugs abgeschlossen werden kann, wenn die gegenwärtige Fahrtgeschwindigkeit des Fahrzeugs nicht innerhalb des geänderten betriebsfähigen Bereichs ist.

11. Fahrzeugvorrichtung nach Anspruch 10, wobei der Prozessor (130) konfiguriert ist, um den Betrieb des Fahrzeugs zu steuern, um die Spurwechselfunktion in dem geänderten betriebsfähigen Bereich durchzuführen, wenn die Spurwechselfunktion bei der gegenwärtigen Fahrtgeschwindigkeit des Fahrzeugs abgeschlossen werden kann, und um den Betrieb der Spurwechselfunktion zu verhindern, wenn die Spurwechselfunktion bei der gegenwärtigen Fahrtgeschwindigkeit des Fahrzeugs nicht abgeschlossen werden kann.

**12.** Fahrzeugsystem, umfassend:

eine Fahrzeugvorrichtung (100) nach einem der Ansprüche 1 bis 11
und
eine Anzeige (240), die konfiguriert ist, um eine Benachrichtigung über den bestimmten betriebsfähigen Bereich auszugeben.

**13.** Verfahren, umfassend:

Bestimmen, durch einen Prozessor (130), eines betriebsfähigen Bereichs einer Fahrassistenzfunktion oder einer autonomen Fahrfunktion, die von einem Fahrzeug in einem Land durchgeführt werden soll, wenn das Fahrzeug in das Land unter einer Bedingung einer Fahrassistenzfunktion oder einer autonomen Fahrfunktion während der Fahrt einfährt;
Ändern und Anwenden, durch den Prozessor (130), des betriebsfähigen Bereichs des Fahrzeugs, um die Fahrassistenzfunktion oder die autonome Fahrfunktion durchzuführen, um die Verkehrsvorschriften des Landes zu erfüllen; und
Ausgeben, durch eine Anzeige (240), einer Benachrichtigung über den bestimmten betriebsfähigen Bereich,
**dadurch gekennzeichnet, dass**
der betriebsfähige Bereich der Fahrassistenzfunktion oder der autonomen Fahrfunktion einem Bereich von der berechneten minimalen betriebsfähigen Geschwindigkeit bis zu einer maximalen betriebsfähigen Geschwindigkeit entspricht, wobei die maximale betriebsfähige Geschwindigkeit größer oder gleich einer maximalen Geschwindigkeitsbegrenzung des Landes ist.

**14.** Verfahren nach Anspruch 13, weiter umfassend
Berechnen, durch den Prozessor (130), einer minimalen betriebsfähigen Geschwindigkeit nach mindestens einem der Folgenden: einem maximalen Erfassungsabstand in einer heckseitigen Richtung des Fahrzeugs, einer maximalen Verzögerung eines sich nähernden Fahrzeugs, einer Randzeit, bevor das sich nähernde Fahrzeug verzögert, wenn ein Spurwechselvorgang durchgeführt wird, und einer Zeit für das sich nähernde Fahrzeug, um einen Sicherheitsabstand zwischen dem Fahrzeug und dem sich nähernden Fahrzeug nach der Verzögerung des sich nähernden Fahrzeugs beizubehalten.

**Revendications**

**1.** Appareil (100) de véhicule comprenant :

un processeur (130) configuré pour déterminer une plage de fonctionnement d'une fonction d'aide à la conduite ou d'une fonction de conduite autonome à mettre en œuvre par un véhicule dans un pays lorsque le véhicule entre dans le pays sous une condition d'une fonction d'aide à la conduite ou d'une fonction de conduite autonome pendant le déplacement, et pour modifier et appliquer la plage de fonctionnement du véhicule de manière à mettre en œuvre la fonction d'aide à la conduite ou des règlementations du pays ; et
un dispositif de stockage (120) configuré pour stocker la plage de fonctionnement déterminée,
**caractérisé en ce que**
la plage de fonctionnement de la fonction d'aide à la conduite ou de la fonction de conduite autonome correspond à une plage allant d'une vitesse de fonctionnement minimale à une vitesse de fonctionnement maximale, la vitesse de fonctionnement maximale étant supérieure ou égale à une limite de vitesse maximale du pays.

**2.** Appareil de véhicule selon la revendication 1, dans lequel le processeur (130) est configuré pour calculer la vitesse de fonctionnement minimale en fonction d'au moins une caractéristique parmi : une distance de détection maximale dans une direction côté arrière du véhicule, un ralentissement maximum d'un véhicule en approche, une marge de temps avant que le véhicule en approche ne ralentisse lorsqu'une opération de changement de voie est mise en œuvre, et un temps pour que le véhicule en approche maintienne une distance de dégagement entre le véhicule et le véhicule en approche après le ralentissement du véhicule en approche.

**3.** Appareil de véhicule selon la revendication 1, dans lequel, lorsque le véhicule entre dans un nouveau pays pendant son déplacement, le processeur (130) est configuré pour déterminer si une limite de vitesse maximale du pays est différente d'une limite de vitesse maximale du nouveau pays.

4. Appareil de véhicule selon la revendication 3, dans lequel le processeur (130) est configuré pour commander le véhicule de manière à délivrer en sortie une notification d'une modification de la limite de vitesse maximale par le biais d'un afficheur (240) lorsque la limite de vitesse maximale du pays est différente de la limite de vitesse maximale du nouveau pays.

5. Appareil de véhicule selon la revendication 3, dans lequel le processeur (130) est configuré pour modifier la plage de fonctionnement de la fonction d'aide à la conduite ou de la fonction de conduite autonome sur la base de la limite de vitesse maximale du nouveau pays lorsque la limite de vitesse maximale du pays est différente de la limite de vitesse maximale du nouveau pays.

6. Appareil de véhicule selon la revendication 5, dans lequel le processeur (130) est configuré pour commander le véhicule de manière à délivrer en sortie la plage de fonctionnement modifiée de la fonction d'aide à la conduite ou de la fonction de conduite autonome par le biais d'un afficheur (240).

7. Appareil de véhicule selon la revendication 6, dans lequel le processeur (130) est configuré pour déterminer si une fonction de changement de voie est en cours et pour déterminer si une plage de fonctionnement lorsque la fonction de changement de voie est en cours.

8. Appareil de véhicule selon la revendication 7, dans lequel le processeur (130) est configuré pour permettre l'opération de la fonction de changement de voie lorsque la vitesse de conduite actuelle du véhicule est dans la plage de fonctionnement modifiée.

9. Appareil de véhicule selon la revendication 7, dans lequel le processeur (130) est configuré pour empêcher l'opération de la fonction de changement de voie lorsque la vitesse de conduite actuelle du véhicule n'est pas dans la plage de fonctionnement modifiée.

10. Appareil de véhicule selon la revendication 7, dans lequel le processeur (130) est configuré pour déterminer si la fonction de changement de voie peut être réalisée à la vitesse de conduite actuelle du véhicule lorsque la vitesse de conduite actuelle du véhicule n'est pas dans la plage de fonctionnement modifiée.

11. Appareil de véhicule selon la revendication 10, dans lequel le processeur (130) est configuré pour commander le fonctionnement du véhicule de manière à mettre en œuvre la fonction de changement de voie dans la plage de fonctionnement modifiée lorsque la fonction de changement de voie peut être réalisée à la vitesse de conduite actuelle du véhicule, et à empêcher l'opération de la fonction de changement de voie lorsque la vitesse de voie du véhicule.

12. Système de véhicule comprenant :

   un appareil (100) de véhicule selon l'une quelconque des revendications 1 à 11
   et
   un afficheur (240) configuré pour délivrer en sortie une notification de la plage de fonctionnement déterminée.

13. Procédé comprenant :

   la détermination, par un processeur (130), d'une plage de fonctionnement d'une fonction d'aide à la conduite ou d'une fonction de conduite autonome à mettre en œuvre par un véhicule dans un pays lorsque le véhicule entre dans le pays sous une condition d'une fonction d'aide à la conduite ou d'une fonction de conduite autonome pendant le déplacement ;
   la modification et l'application, par le processeur (130), de la plage de fonctionnement du véhicule de manière à mettre en œuvre la fonction d'aide à la conduite ou la fonction de conduite autonome pour se conformer aux réglementations du pays en matière de circulation ; et
   la délivrance en sortie, par un afficheur (240), d'une notification de la plage de fonctionnement déterminée,
   **caractérisé en ce que**
   la plage de fonctionnement de la fonction d'aide à la conduite ou de la fonction de conduite autonome correspond à une plage allant de la vitesse de fonctionnement minimale calculée à une vitesse de fonctionnement maximale, la vitesse de fonctionnement maximale étant supérieure ou égale à une limite de vitesse maximale du pays.

14. Procédé selon la revendication 13, comprenant en outre
le calcul, par le processeur (130), d'une vitesse de fonctionnement minimale en fonction d'au moins une caractéristique parmi : une distance de détection maximale dans une direction côté arrière du véhicule, un ralentissement maximum d'un véhicule en approche, une marge de temps avant l'approche et un temps pour que le véhicule en approche maintienne une distance de dégagement entre le véhicule et le véhicule en approche après le ralentissement du véhicule en approche.

FIG. 1

BORDER

MAXIMUM SPEED
OF COUNTRY A
110kph

MAXIMUM SPEED
OF COUNTRY B
130kph

10

20

FIG. 2

BORDER

MAXIMUM SPEED
OF COUNTRY A
110kph

MAXIMUM SPEED
OF COUNTRY B
130kph

40

30

FIG. 3

BORDER

MAXIMUM SPEED
OF COUNTRY A
110kph

MAXIMUM SPEED
OF COUNTRY C
100kph

50

60

FIG. 4

FIG. 5

DURING CHANGING OF
MAXIMUM SPEED LIMIT AND
ADJUSTING OF OPERABLE RANGE

RESET FUNCTION
OPERABLE RANGE OF
CORRESPONDING COUNTRY — S210

INFORM OF RESET
OPERABLE RANGE — S220

LANE
CHANGING — S230
FUNCTION IS
OPERATING?

No →

Yes ↓

CURRENT — S250
DRIVING SPEED
MEETS CHANGED
OPERABLE
RANGE?

Yes →

No ↓

STOP IMMEDIATELY LANE
CHANGING FUNCTION
ACCORDING TO LANE
CHANGE STOP PROCEDURE — S260

MAINTAIN CONTINUOUSLY
LANE CHANGING FUNCTION IN — S240
CHANGED OPERABLE RANGE

END

FIG. 6

FIG. 7

FIG. 8

**EP 3 552 905 B1**

**Patent documents cited in the description**

- KR 1020180093914
- US 62655831
- WO 2010088869 A1
- EP 2116984 A1
- WO 2012131405 A1
- US 2016272204 A1